# FASCICULE DE BREVET EUROPEEN

(11) **EP 4 115 053 B1**
(45) Date de publication et mention de la délivrance du brevet: **24.04.2024**
(21) Numéro de dépôt: 21714645.5
(22) Date de dépôt: 03.03.2021
(51) Int. Cl.: F01D 5/28, F01D 5/14, F04D 29/02, F04D 29/32, B29C 70/24, B29D 99/00, D03D 25/00

(54) **AUBE DE SOUFFLANTE COMPRENANT UN INSERT DE FIBRES RAIDES**
FANSCHAUFEL MIT EINEM EINSATZ AUS STEIFEN FASERN
FAN BLADE COMPRISING AN INSERT OF STIFF FIBERS

(30) Priorité: 03.03.2020 FR 2002126
(43) Date de publication de la demande: 11.01.2023
(73) Titulaire: SAFRAN AIRCRAFT ENGINES, 75015 Paris (FR)
(72) Inventeur: GONDRE, Guillaume Pascal Jean-Charles, 77550 MOISSY-CRAMAYEL (FR); DE GAILLARD, Thomas Alain, 77550 MOISSY-CRAMAYEL (FR)
(74) Mandataire: Regimbeau
(86) Numéro de dépôt international: PCT/FR2021/050358
(87) Numéro de publication internationale: WO 2021/176179

(56) Documents cités:
- FR-A1- 2 953 225
- FR-A1- 2 955 609
- US-A1- 2016 032 939

## Description

### DOMAINE DE L'INVENTION

L'invention concerne de manière générale le domaine des turbomachines, et plus particulièrement celui des aubes de soufflantes de ces turbomachines et leur procédé de fabrication.

L'invention s'applique plus particulièrement aux aubes de soufflante en matériau composite et leur interaction avec l'entrée de la veine primaire.

### ETAT DE LA TECHNIQUE

Les aubes de turbomachine, et notamment les aubes de soufflante, subissent d'importantes contraintes mécaniques et thermiques et doivent satisfaire à des conditions strictes de poids et d'encombrement. Il a donc été proposé d'utiliser des aubes dans un matériau composite comportant un renfort fibreux densifié par une matrice polymère, qui sont plus légères par rapport à des aubes métalliques à caractéristiques propulsives équivalentes et qui ont une tenue à la chaleur satisfaisante.

De telles aubes en matériau composite comprennent, de manière connue en soi, une structure en matériau composite comprenant un renfort fibreux obtenu par tissage tridimensionnel et une matrice dans laquelle est noyé le renfort fibreux. Cette structure forme par ailleurs un bord d'attaque, un bord de fuite, une paroi intrados et une paroi extrados.

Un bouclier métallique est généralement rapporté sur le bord d'attaque de la pale afin d'améliorer la tenue à l'ingestion de l'aube en dynamique rapide. Toutefois, en statique, ce bouclier apporte de la raideur et de la masse supplémentaire qui augmentent les efforts centrifuges à proximité du bord d'attaque.

En statique, chaque aube de soufflante est soumise à un chargement centrifuge et à l'effort des pressions aérodynamiques. L'aube se déforme alors de manière significative et non homogène. En particulier, il ressort que le bord d'attaque de l'aube se déplace davantage que son bord de fuite.

Dans le cas d'une soufflante comprenant des aubes en matériau composite, l'angle de calage est un paramètre important pour les performances aérodynamiques des aubes de soufflante. Cet angle de calage est défini comme l'angle, dans le plan tangentiel à la plateforme de l'aube de soufflante, formé entre la corde de l'aube de soufflante (c'est-à-dire ce segment, dans le plan tangentiel, reliant le bord d'attaque et le bord de fuite de l'aube) et l'axe de rotation de la soufflante. Plus l'angle de calage est grand, plus l'aube de soufflante est 'fermée'. Plus l'angle de calage est faible, plus l'aube est 'ouverte'.

L'angle de calage est un paramètre aérodynamique optimisé pour le point de fonctionnement en régime de sommet de montée (généralement désigné par sa terminologie anglo-saxonne « top of climb ») ou en régime de croisière (généralement désigné par sa terminologie anglo-saxonne « cruise ») afin de réaliser le débit souhaité. L'angle de calage aux autres points de fonctionnement résulte d'un calcul éléments finis. L'angle de calage peut être tracé en fonction de la hauteur d'aube, c'est-à-dire qu'il évolue entre le pied et le sommet de l'aube (en raison de sa forme vrillée).

Il est également possible de tracer une différence de calage qui correspond à la différence d'angle de calage entre deux régimes donnés. Des valeurs élevées de différence de calage sont directement dues à des valeurs élevées de déplacements de l'aube en statique, en raison notamment du dévrillage de l'aube résultant du déplacement plus important du bord d'attaque que du bord de fuite selon les régimes moteur.

Lors de la conception d'aube de soufflante, un des objectifs des itérations aéromécaniques est de réduire le dévrillage de l'aube. Pour cela, il est connu de modifier les lois de pale, notamment les lois d'empilage suivant la hauteur et la corde de l'aube. Cependant, ces modifications peuvent aller à l'encontre notamment des performances aérodynamiques.

De plus, pour améliorer l'aérodynamisme de l'aube, il est préférable que l'angle de calage soit 'ouvert' en régime de sommet de montée (pour assurer le débit) et 'fermé' en régime partiel et/ou en régime de montée (généralement désigné par sa terminologie anglo-saxonne « climb ») pour la marge au pompage/flottement.

Cependant, dans la plupart des aubes de soufflante en matériaux composite, la différence de déplacement tangentiel entre le bord d'attaque et le bord de fuite de l'aube est plus important en régime de montée qu'en sommet de montée. Il en découle que l'ouverture du calage de l'aube de soufflante est plus grande en montée qu'en sommet de montée, et par conséquent que l'angle de calage de l'aube est plus grand en sommet de montée qu'en montée. Le dévrillage de l'aube pénalise donc ses performances aérodynamiques.

Les documents FR 2 953 225 et FR 2 955 609 et US 2016/032939 décrivent des exemples d'aubes comprenant une structure en matériau composite comprenant un renfort fibreux noyé dans une matrice.

### EXPOSE DE L'INVENTION

Un objectif de l'invention est donc de remédier aux inconvénients précités, en proposant une aube de soufflante pour une turbomachine dont le déplacement entre les différents régimes de fonctionnement moteur est cohérent avec les performances aérodynamiques recherchées, notamment en régime de montée et de sommet de montée/croisière.

Il est à cet effet proposé, selon un premier aspect de l'invention une aube de soufflante d'une turbomachine selon la revendication 1.

Certaines caractéristiques préférées mais non limitatives de l'aube selon le premier aspect sont les suivantes, prises individuellement ou en combinaison :
- les torons de chaine de la deuxième portion comprennent en outre des premiers torons ;
- l'aube comprend en outre une pale à profil aérodynamique propre à s'étendre dans un flux d'air présentant un sommet et un pied configuré pour être fixé à un disque de la soufflante, et dans laquelle la deuxième portion s'étend sur toute une hauteur de l'aube, du pied jusqu'au sommet ;
- l'aube comprend en outre une pale à profil aérodynamique propre à s'étendre dans un flux d'air présentant un sommet et un pied configuré pour être fixé à un disque de la soufflante, et dans laquelle la deuxième portion s'étend sur une portion de longueur de corde de la structure en matériau composite qui est variable entre le pied et le sommet de l'aube ;
- au niveau du pied de l'aube, la deuxième portion s'étend sur une longueur comprise entre 25 % et 40 % de la longueur de corde de la structure en matériau composite ;
- l'aube comprend en outre un bouclier métallique, rapporté et fixé sur le bord d'attaque, la deuxième portion dépassant le bouclier métallique au niveau du pied mais étant recouverte par le bouclier métallique au niveau du sommet ;
- la deuxième portion dépasse le bouclier métallique du pied jusqu'à 40% à 50% d'une hauteur de l'aube puis est recouverte par le bouclier métallique jusqu'au sommet ;
- à mi-hauteur de l'aube, la deuxième portion s'étend sur une longueur comprise entre 10 % et 30 % de la longueur de corde de la structure en matériau composite ;
- au sommet de l'aube, la deuxième portion s'étend sur une longueur comprise entre 0 % et 5 % de la longueur de corde de la structure en matériau composite ;
- le renfort fibreux comprend en outre une troisième portion s'étendant entre la deuxième portion et la première portion, une densité des deuxièmes torons diminuant progressivement dans la troisième portion de la deuxième portion vers la première portion ;
- la troisième portion s'étend sur une longueur comprise entre 5 % et 10 % de la longueur de corde de la structure en matériau composite ;
- l'aube comprend en outre un bouclier métallique rapporté et fixé sur le bord d'attaque, ledit bouclier métallique recouvrant la deuxième portion et dévoilant la première portion ;
- les premiers torons et les deuxièmes torons comprennent des fibres de carbone.

Selon un deuxième aspect, l'invention propose une soufflante pour une turbomachine comprenant une pluralité d'aubes conformes au premier aspect et une turbomachine comprenant une telle soufflante.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un exemple de réalisation d'un renfort fibreux d'une aube de soufflante en matériau composite conforme à l'invention.
La figure 2 est une vue de côté de l'aube comprenant le renfort fibreux de la figure 1, après injection de la matrice et fixation d'un bouclier métallique.
La figure 3 illustre un exemple de plan de chaîne du renfort fibreux de la figure 1 suivant un plan normal à l'axe d'empilement Z, au niveau du pied de l'aube.

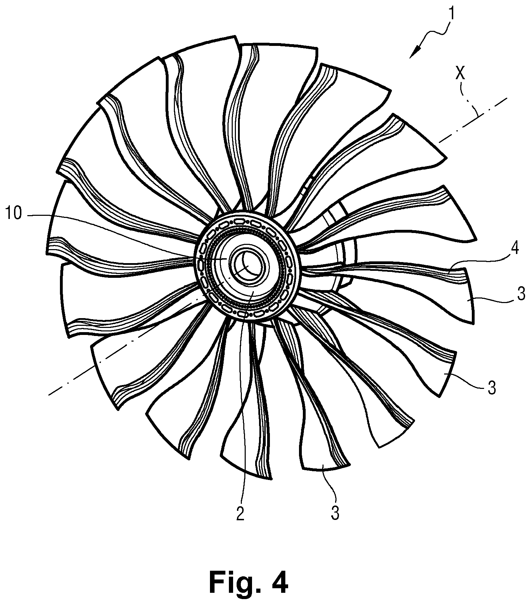

La figure 4 est une vue en perspective d'un exemple de réalisation d'une soufflante comprenant des aubes conformes à l'invention.

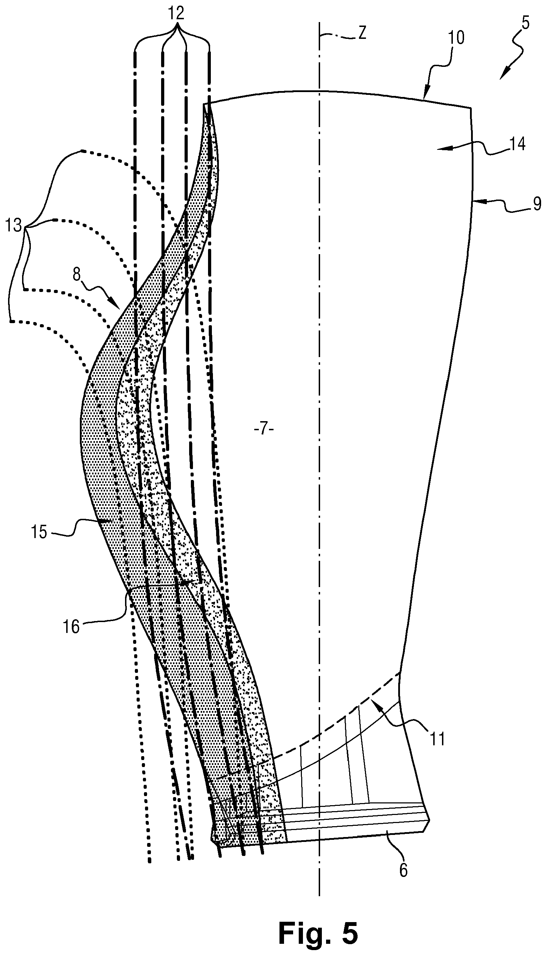

La figure 5 illustre de façon schématique le tissage du renfort de la figure 1.

Sur l'ensemble des figures, les éléments similaires portent des références identiques.

### DESCRIPTION DETAILLEE DE L'INVENTION

Dans la présente demande, l'amont et l'aval sont définis par rapport au sens d'écoulement normal du gaz dans la soufflante 1 à travers la turbomachine. Par ailleurs, on appelle axe de révolution de la soufflante 1, l'axe X de symétrie radiale de la soufflante 1. La direction axiale correspond à la direction de l'axe X de la soufflante 1, et une direction radiale est une direction perpendiculaire à cet axe et passant par lui. Enfin, on utilisera interne et externe, respectivement, en référence à une direction radiale de sorte que la partie ou la face interne d'un élément est plus proche de l'axe X que la partie ou la face externe du même élément.

Une soufflante 1 de turbomachine comprend un disque 2 de soufflante portant une pluralité d'aubes 3 de soufflante, associées à des plateformes inter-aubes.

Chaque aube 3 comprend une structure en matériau composite comportant un renfort fibreux obtenu par tissage tridimensionnel et une matrice dans laquelle est noyé le renfort fibreux. Par tissage tridimensionnel, on comprendra que les torons de chaîne suivent des trajets sinueux afin de lier entre eux des torons de trame, étant noté qu'un tissage tridimensionnel, notamment à armure interlock, peut inclure des tissages bidimensionnels en surface. Différentes armures de tissage tridimensionnel peuvent être utilisées, telles que des armures interlock, multi-satin ou multi-voile, par exemple, comme décrit notamment dans le document WO 2006/136755.

Cette structure en matériau composite comprend un pied 6, une pale 7 à profil aérodynamique présentant un bord d'attaque 8, un bord de fuite 9 et un sommet 10. Le bord d'attaque 8 est configuré pour s'étendre en regard de l'écoulement des gaz entrant dans la turbomachine. Il correspond à la partie antérieure d'un profil aérodynamique qui fait face au flux d'air et qui divise l'écoulement d'air en un écoulement d'intrados et en un écoulement extrados. Le bord de fuite 9 quant à lui correspond à la partie postérieure du profil aérodynamique, où se rejoignent les écoulements intrados et extrados.

Enfin, la structure est formée d'une pluralité de sections d'aube empilées depuis le pied 6 selon un axe d'empilement Z s'étendant radialement par rapport à l'axe de révolution X de la soufflante 1.

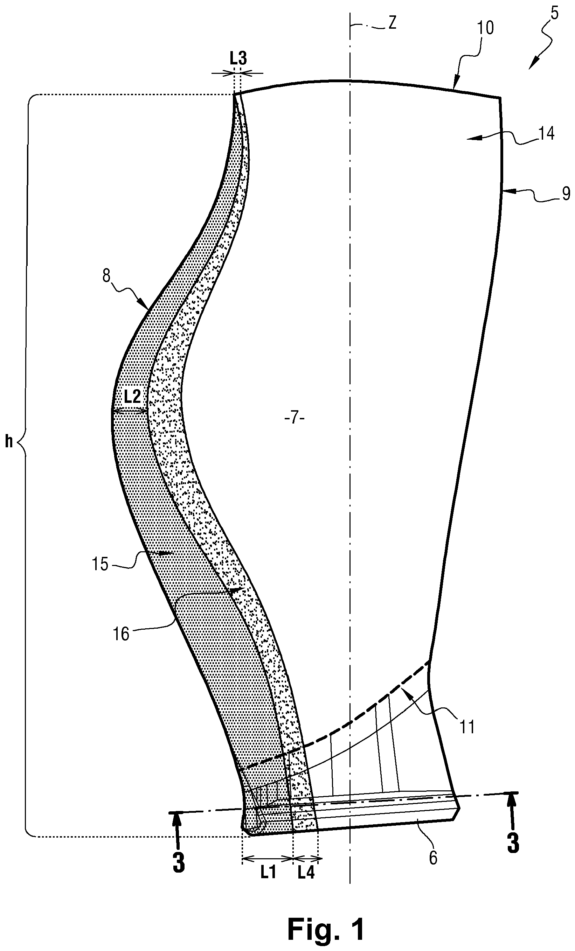

Le pied 6 de chaque aube 3 est engagé dans une rainure axiale formée dans le disque 2 de soufflante. La pale 7 à profil aérodynamique quant à elle est propre à être placée dans un flux d'air, lorsque le moteur est en fonctionnement de sorte à diviser l'écoulement d'air en un écoulement d'intrados et en un écoulement extrados afin de générer une portance. L'aube 3 présente une hauteur h correspondant à une dimension suivant l'axe d'empilement Z des sections d'aube d'une extrémité radiale inférieure du pied 6 et au sommet 10. La hauteur h peut par exemple être mesurée à l'intersection entre le bord d'attaque 8 et la limite inférieure de la pale 7 (qui correspond au raccordement entre le bord d'attaque 8 et la plateforme 11). Sur la figure 1 qui représente le renfort fibreux 5, l'emplacement de plateforme 11 est symbolisé par un trait en pointillés.

Dans une forme de réalisation, l'aube 3 comprend en outre un bouclier 4 métallique rapporté et fixé sur le bord d'attaque 8 afin de protéger l'aube 3 contre, entre autres, l'ingestion d'objets (tels que des oiseaux).

Le renfort fibreux 5 peut être formé à partir d'une préforme fibreuse en une seule pièce obtenue par tissage tridimensionnel. Il comprend des fibres qui peuvent notamment être en carbone, en verre, en basalte, en aramide. La matrice quant à elle est typiquement une matrice polymère, par exemple époxyde, bismaléimide ou polyimide. L'aube 3 est alors formée par moulage au moyen d'un procédé d'injection sous vide de résine du type RTM (pour « Resin Transfer Moulding), ou encore VARTM (pour Vacuum Resin Transfer Molding).

Le renfort fibreux 5 est formé par tissage tridimensionnel de torons de chaine et de torons de trame. Les torons de chaîne comprennent des premiers torons 12 présentant une raideur prédéfinie, et des deuxièmes torons 13 présentant une raideur prédéfinie qui est supérieure à celle des premiers torons 12. Dans une forme de réalisation, les torons de trame comprennent uniquement des premiers torons 12.

Le renfort fibreux 5 est donc obtenu par hybridation des torons de chaîne le constituant afin d'utiliser au mieux les propriétés mécaniques de chaque toron de chaîne en fonction des zones de l'aube 3 et du type de sollicitation.

Par raideur, on comprendra ici le module d'Young (E). Selon l'invention, la raideur des deuxièmes torons 13 est comprise entre 1.2 et 1.5 fois la raideur des premiers torons 12.

Les premiers torons 12 et les deuxièmes torons 13 ont un module d'Young élevé, par exemple supérieur ou égal à 250 GPa, et ont pour fonction de permettre de respecter les critères de conception de l'aube 3, et notamment le statut fréquentiel de l'aube 3. Cela permet ainsi de limiter ou du moins d'éloigner les croisements fréquentiels entre les premiers modes propres de l'aube 3, énergétiques, et les harmoniques moteur. En outre, l'ajout de torons ayant une raideur plus importante (les deuxièmes torons 13) dans le renfort 5 permet d'augmenter la fréquence du premier mode propre de l'aube 3.

Les premiers torons 12 sont donc utilisés dans le tissage de tout ou partie de la préforme fibreuse pour former le renfort 5, dont la portion du renfort 5 (ou première portion 14) qui comprend le bord de fuite 9. Cette première portion 14 du renfort 5 est dépourvue de deuxièmes torons 13.

Les deuxièmes torons 13, dont la raideur est plus grande que celle des premiers torons 12, ont pour fonction de réduire le dévrillage de la pale 7 en statique. Ces deuxièmes torons 13 sont donc utilisés dans le tissage de la préforme fibreuse pour former la portion du renfort 5 (ou deuxième portion 15) qui forme le bord d'attaque 8. Les deuxièmes torons 13 formant le bord d'attaque 8 permettent ainsi de rigidifier la zone du bord d'attaque 8 et de diminuer le déplacement tangentiel du bord d'attaque 8. Ainsi, la différence de déplacement tangentiel entre le bord d'attaque 8 et le bord de fuite 9 est plus équilibrée, voire nulle. Le calage de l'aube 3 est donc peu modifié lors des changements de régime moteur.

La Demanderesse s'est aperçue du fait que, malgré l'augmentation de la raideur de l'aube 3 dans la zone du bord d'attaque 8, celle-ci n'avait pas d'effet néfaste sur le comportement de l'aube 3 en cas d'ingestion d'objets car les déformations sont principalement reprises par le bouclier 4 métallique.

La deuxième portion 15 comprend à la fois des premiers torons 12 et des deuxièmes torons 13. Toutefois, cette deuxième portion 15 comprend davantage de deuxièmes torons 13 que de premiers torons 12 afin d'augmenter suffisamment la raideur de la pale 7 dans la zone du bord d'attaque 8. Typiquement, la deuxième portion 15 comprend entre 70 % et 90 % de deuxièmes torons 13. Dans une forme de réalisation, seuls les premiers et deuxièmes torons 12, 13 sont utilisés dans le tissage de la deuxième portion 15. Le complément (soit entre 30 % et 10 %, respectivement) est alors constitué par des premiers torons 12.

Dans une forme de réalisation, pour assurer une utilisation optimale de la raideur des deuxièmes torons 13 dans la zone du bord d'attaque 8, les deuxièmes torons 13 peuvent être placés en peau, c'est-à-dire au niveau des faces intrados et extrados de l'aube 3. Les peaux, raides, permettent ainsi de limiter les déformations en torsion et en flexion de l'aube 3, et donc de diminuer la différence de calage.

La deuxième portion 15 s'étend sur toute la hauteur h de l'aube 3, du pied 6 jusqu'au sommet 10, afin d'augmenter la raideur du renfort 5 dans la zone du bord d'attaque 8 sur toute sa hauteur h.

Afin d'adapter la raideur de la zone du bord d'attaque 8 en fonction des sollicitations de l'aube 3, qui sont directement liées au régime moteur (notamment pour le calage) et au diamètre de la soufflante (qui détermine la taille des oiseaux susceptibles d'être ingérés et donc le besoin de tenue en ingestion de l'aube 3), la deuxième portion 15 s'étend sensiblement axialement sur une portion de longueur de corde L de la structure en matériau composite qui est variable entre le pied 6 et le sommet 10 de l'aube 3. Par corde L, on comprendra ici le segment de droite parallèle à un plan tangentiel par rapport à l'axe X et qui relie le bord d'attaque 8 et le bord de fuite 9.

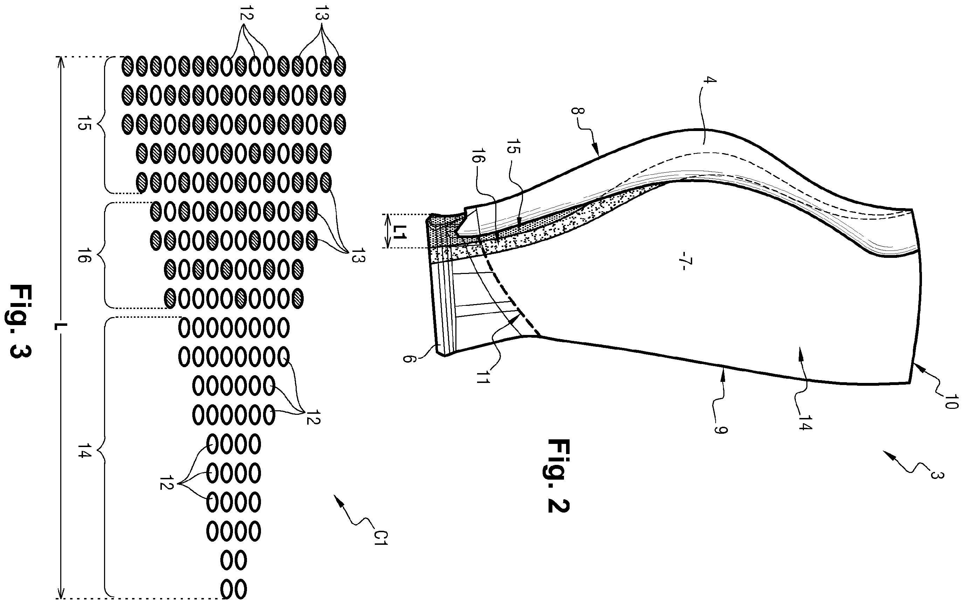

Ainsi, comme cela a été représenté sur la figure 2, la longueur de la deuxième portion 15 peut être suffisamment étendue pour dépasser de l'extrémité du bouclier 4 métallique sur les premiers pourcentages de hauteur h de l'aube 3 (jusqu'à mi-hauteur h/2) car les sollicitations en ingestion sont faibles à ces hauteurs. A partir de 40 % à 50 % de hauteur h, la longueur de la deuxième portion 15 peut diminuer progressivement jusqu'au sommet 10 pour respecter les besoins en tenue à l'ingestion, de sorte que, sur la moitié haute de la deuxième portion 15 (i.e. la portion située radialement à l'extérieur par rapport à l'axe X), la deuxième portion 15 est masquée par le bouclier 4.

Par exemple, au sein du pied 6 de l'aube 3, la deuxième portion 15 s'étend sur une longueur L1 comprise entre 25 % et 40 % de la longueur de corde L, par exemple sur une longueur L1 égale à environ un tiers de la longueur de corde L au niveau du pied 6 de l'aube. A mi-hauteur h/2 de l'aube 3, la deuxième portion 15 s'étend sur une longueur L2 comprise entre 10 % et 30 % de la longueur de corde, par exemple sur une longueur L2 égale à environ un quart de la longueur de corde à mi-hauteur L de l'aube 3. Au sommet 10 en revanche, la deuxième portion 15 est très étroite voire présente une longueur L3 nulle, car cette zone est généralement fortement sollicitée en ingestion.

Le renfort 5 comprend en outre une troisième portion 16 s'étendant entre la deuxième portion 15 la première portion 14 et au sein de laquelle la densité des deuxièmes torons 13 diminue progressivement de la deuxième portion 15 vers la première portion 14, jusqu'à ce que la densité de deuxièmes torons 13 soit nulle. Dans une forme de réalisation, seuls les premiers et deuxièmes torons 12, 13 sont utilisés comme fils de chaîne dans le tissage de la troisième portion 16.

Cette troisième portion 16 est configurée pour servir d'interface entre la première portion 14 et la deuxième portion 15 afin de limiter les fragilités dues à des discontinuités de matériaux. Lorsque la première portion 14 et la deuxième portion 15 sont bout à bout dans le renfort 5, l'aube 3 ainsi obtenue a effectivement une différence de calage réduite, voire nulle, quel que soit le régime. Toutefois, la Demanderesse s'est aperçue du fait qu'en l'absence de troisième portion 16, c'est-à-dire en augmentant de manière abrupte des premiers torons 12 et en supprimant simultanément les deuxièmes torons 13 à l'interface entre la première portion 14 et la deuxième portion 15 du renfort fibreux 5, l'aube 3 obtenue risquait d'être fortement endommagée au niveau de cette interface en cas d'impact, car l'interface entre les deux portions 14, 15 du renfort 5 est fragilisée par la discontinuité des propriétés des matériaux.

La troisième portion 16 permet ainsi de faire une transition entre les propriétés matériaux de la première portion 14 et les propriétés matériaux de la deuxième portion 15. Pour cela, la densité des premiers torons 12 est progressivement augmentée au sein de la troisième portion 16 intermédiaire de la deuxième portion 15 vers la première portion 14.

Par exemple, la troisième portion 16 comprend à proximité de la deuxième portion 15, entre 50 % et 30 % de deuxièmes torons 13, le complément (soit entre 50 % et 70 %, respectivement) étant alors constitué par des premiers torons 12. La proportion de deuxièmes torons 13 au sein de la troisième portion 16 diminue ensuite progressivement jusqu'à atteindre 0 % à proximité de la première portion 14, tandis que la proportion de premiers torons 12 augmente progressivement et de manière complémentaire jusqu'à atteindre 100 % à proximité de la première portion 14.

Dans une forme de réalisation, la troisième portion 16 s'étend sur une longueur L4 comprise entre 5 % et 10 % de la longueur de corde L. La longueur L4 de la troisième portion 16 peut être constante sur toute la hauteur h de l'aube 3 afin de d'assurer une transition douce entre la deuxième et la première portion 15, 14. En variante, la longueur L4 de la troisième portion 16 peut être globalement proportionnelle à celle de la deuxième portion 15. Dans cette variante de réalisation, la longueur L4 de la troisième portion est maximale au pied 6 de l'aube 3, puis à partir de 40 % à 50 % de hauteur h, la longueur de la troisième portion 16 peut diminuer progressivement jusqu'à devenir sensiblement nulle au sommet 10. Ainsi, à partir de la mi-hauteur h/2 de l'aube 3, la troisième portion 16 est masquée par le bouclier 4.

Les premiers torons 12 et les deuxièmes torons 13 peuvent comprendre des fibres de carbone.

Par exemple, les premiers torons 12 peuvent comprendre des fibres de carbone HexTow IM7 commercialisées par HERCEL, dont le module d'Young est d'environ 276 GPa.

Les deuxièmes torons 13 peuvent comprendre des fibres de carbone TORAYCA T1100G commercialisées par TORAY, dont le module d'Young est de 294 GPa et/ou des fibres de carbone Tenax UMS45 commercialisées par TEIJIN, dont le module d'Young est de 425 GPa.

La figure 1 représente schématiquement une aube 3 dont le renfort fibreux 5 a été mis en forme à partir d'une préforme fibreuse tissée tridimensionnelle, avant injection de résine ou densification par une matrice et usinage éventuel, afin d'obtenir une aube 3 de soufflante 1 en matériau composite conforme à l'invention.

Un exemple schématique de plan de chaîne C1 du renfort fibreux 5 de la figure 1 a été représenté sur la figure 3. Le plan de chaîne C1 est une vue en coupe de la préforme fibreuse suivant un plan normal à l'axe d'empilement Z, au niveau du pied 6 de l'aube 3 (voir le plan de coupe 3-3 sur la figure 1). Dans le renfort fibreux 5, chaque plan de chaîne est séparé du plan de chaîne immédiatement adjacent par une ligne de torons de trame. On notera que la figure 3 illustre un plan de chaîne C1 dans lequel seuls les torons de chaîne (c'est-à-dire dans la direction d'empilement des sections) ont été représentés, les torons de trame ayant été omis afin de simplifier la lecture de la figure. Cette figure 3 illustre ainsi de manière schématique un premier exemple d'hybridation des torons de chaîne.

Comme on peut le voir sur la figure 3, au sein de la deuxième portion 15 qui s'étend ici sur environ un tiers de la longueur de la corde L au niveau du pied 6 de l'aube 3, entre 70 % et 90 % des torons de chaîne sont des deuxièmes torons 13, le complément étant constitué par des deuxièmes torons 13. Au sein de la troisième portion 16, la densité de deuxièmes torons 13 diminue progressivement de la deuxième portion 15 en direction de la première portion 14, jusqu'à devenir nulle (la densité de premiers torons 12 augmentant progressivement de manière complémentaire). Au sein de la première portion 14, 100 % des torons de chaîne sont constitués de premiers torons 12.

De manière générale, les configurations décrites sont valables pour des moteurs dont la soufflante 1 peut avoir un diamètre extérieur de l'ordre de 1,8 mètre à 3 mètres. Le nombre d'aubes 3 de la soufflante 1 peut être égal par à 16 ou 18. Quel que soit le diamètre de la soufflante, le nombre d'aubes 3 de soufflante 1 sera réduit autant que possible. Parmi différents critères, un choix de paramètres (notamment longueur de la deuxième portion 15 et le choix du matériau constitutif des deuxièmes torons 13) dépendra plus particulièrement du comportement de l'aube 3 de soufflante et de la combinaison « fréquentielle/dévrillage » de l'aube 3.

## Revendications

1. Aube (3) de soufflante (1) d'une turbomachine comprenant une structure en matériau composite comprenant un renfort fibreux (5) obtenu par tissage tridimensionnel de torons de chaine et de torons de trame et une matrice dans laquelle est noyé le renfort fibreux (5),
- la structure en matériau composite comprenant un bord d'attaque (8) et un bord de fuite (9) ;
- le renfort fibreux (5) comprenant une première portion (14) formant le bord de fuite (9) et une deuxième portion (15) formant le bord d'attaque (8) ; et
- les torons de chaine du renfort fibreux (5) comprenant des premiers torons (12) présentant une raideur prédéfinie ;
les torons de chaine du renfort fibreux (5) comprenant en outre des deuxièmes torons (13) présentant une raideur supérieure à celle des premiers torons (12), la première portion (14) comprenant tout ou partie des premiers torons (12) et étant dépourvue de deuxièmes torons (13) tandis que la deuxième portion (15) comprend tout ou partie des deuxièmes torons (13);
l'aube (3) étant **caractérisée en ce que** les deuxièmes torons (13) présentent un module d'Young compris entre 1.2 et 1.5 fois le module d'Young des premiers torons (12).

2. Aube (3) selon la revendication 1, dans laquelle les torons de chaine de la deuxième portion (15) comprennent en outre des premiers torons (12).

3. Aube (3) selon l'une des revendications 1 ou 2, comprenant en outre une pale (7) à profil aérodynamique propre à s'étendre dans un flux d'air présentant un sommet (10) et un pied (6) configuré pour être fixé à un disque (2) de la soufflante (1), et dans laquelle la deuxième portion (15) s'étend sur toute une hauteur (h) de l'aube (3), du pied (6) jusqu'au sommet (10).

4. Aube (3) selon l'une des revendications 1 à 3, comprenant en outre une pale (7) à profil aérodynamique propre à s'étendre dans un flux d'air présentant un sommet (10) et un pied (6) configuré pour être fixé à un disque (2) de la soufflante (1), et dans laquelle la deuxième portion (15) s'étend sur une portion de longueur de corde (L) de la structure en matériau composite qui est variable entre le pied (6) et le sommet (10) de l'aube (3).

5. Aube (3) selon la revendication 4, dans laquelle, au niveau du pied (6) de l'aube (3), la deuxième portion (15) s'étend sur une longueur (L1) comprise entre 25 % et 40 % de la longueur de corde (L) de la structure en matériau composite.

6. Aube (3) selon l'une des revendications 4 ou 5, comprenant en outre un bouclier métallique (4), rapporté et fixé sur le bord d'attaque (8), la deuxième portion (15) dépassant le bouclier métallique (4) au niveau du pied (6) mais étant recouverte par le bouclier métallique (4) au niveau du sommet (10).

7. Aube (3) selon la revendication 6, dans laquelle la deuxième portion (15) dépasse le bouclier métallique (4) du pied (6) jusqu'à 40% à 50% d'une hauteur (5) de l'aube (3) puis est recouverte par le bouclier métallique (4) jusqu'au sommet (10).

8. Aube (3) selon l'une des revendications 4 à 7, dans laquelle, à mi-hauteur (h/2) de l'aube (3), la deuxième portion (15) s'étend sur une longueur (L2) comprise entre 10 % et 30 % de la longueur de corde (L) de la structure en matériau composite.

9. Aube (3) selon l'une des revendications 4 à 8, dans laquelle, au sommet (10) de l'aube (3), la deuxième portion (15) s'étend sur une longueur (L3) comprise entre 0 % et 5 % de la longueur de corde (L) de la structure en matériau composite.

10. Aube (3) selon l'une des revendications 1 à 9, dans laquelle le renfort fibreux (5) comprend en outre une troisième portion (16) s'étendant entre la deuxième portion (15) et la première portion (14), une densité des deuxièmes torons (13) diminuant progressivement dans la troisième portion (16) de la deuxième portion (15) vers la première portion (14).

11. Aube (3) selon la revendication 10, dans laquelle la troisième portion (16) s'étend sur une longueur (L4) comprise entre 5 % et 10 % de la longueur de corde (L) de la structure en matériau composite.

12. Aube (3) selon l'une des revendications 1 à 11, comprenant en outre un bouclier métallique rapporté et fixé sur le bord d'attaque (8), ledit bouclier métallique recouvrant la deuxième portion (15) et dévoilant la première portion (14).

13. Aube (3) selon l'une des revendications 1 à 12, dans laquelle les premiers torons (12) et les deuxièmes torons (13) comprennent des fibres de carbone.

14. Soufflante (1) pour une turbomachine comprenant une pluralité d'aubes (3) conformes à l'une des revendications 1 à 13.

15. Turbomachine comprenant au moins une soufflante (1) selon la revendication 14.

## Patentansprüche

1. Schaufel (3) eines Gebläses (1) einer Turbomaschine, umfassend eine Struktur aus Verbundwerkstoff, umfassend eine Faserverstärkung (5), die durch dreidimensionales Weben von Kettlitzen und von Schusslitzen erhalten wird und eine Matrix, in die die Faserverstärkung (5) eingelassen ist,
- wobei die Struktur aus Verbundwerkstoff eine Vorderkante (8) und eine Hinterkante (9) umfasst;
- wobei die Faserverstärkung (5) einen ersten Abschnitt (14), der die Hinterkante (9) bildet, und einen zweiten Abschnitt (15), der die Vorderkante (8) bildet, umfasst; und
- wobei die Kettlitzen der Faserverstärkung (5) erste Litzen (12) umfassen, die eine vordefinierte Steifheit aufweisen;
wobei die Kettlitzen der Faserverstärkung (5) ferner zweite Litzen (13) umfassen, die eine höhere Steifheit als die der ersten Litzen (12) aufweisen, wobei der erste Abschnitt (14) alle oder einen Teil der ersten Litzen (12) umfasst und keine zweiten Litzen (13), wohingegen der zweite Abschnitt (15) alle oder einen Teil der zweiten Litzen (13) umfasst;
wobei die Schaufel (3) **dadurch gekennzeichnet ist, dass** die zweiten Litzen (13) ein Young-Modul aufweisen, das zwischen dem 1,2- und dem 1,5-fachen des Young-Moduls der ersten Litzen (12) liegt.

2. Schaufel (3) nach Anspruch 1, wobei die Kettlitzen des zweiten Abschnitts (15) ferner erste Litzen (12) umfassen.

3. Schaufel (3) nach einem der Ansprüche 1 oder 2, umfassend ferner ein Schaufelblatt (7) mit aerodynamischem Profil, das imstande ist, sich in einem Luftstrom zu erstrecken, aufweisend eine Spitze (10) und einen Fuß (6), der zur Befestigung an einer Scheibe (2) des Gebläses (1) ausgelegt ist, und wobei sich der zweite Abschnitt (15) über die gesamte Höhe (h) der Schaufel (3) vom Fuß (6) bis zur Spitze (10) erstreckt.

4. Schaufel (3) nach einem der Ansprüche 1 bis 3, umfassend ferner ein Schaufelblatt (7) mit aerodynamischem Profil, das imstande ist, sich in einem Luftstrom zu erstrecken, aufweisend eine Spitze (10) und einen Fuß (6), der zur Befestigung an einer Scheibe (2) des Gebläses (1) ausgelegt ist, und wobei sich der zweite Abschnitt (15) über einen Abschnitt der Sehnenlänge (L) der Struktur aus Verbundwerkstoff erstreckt, die zwischen dem Fuß (6) und der Spitze (10) der Schaufel (3) variabel ist.

5. Schaufel (3) nach Anspruch 4, wobei sich im Bereich des Fußes (6) der Schaufel (3) der zweite Abschnitt (15) über eine Länge (L1) erstreckt, die zwischen 25% und 40% der Sehnenlänge (L) der Struktur aus Verbundwerkstoff liegt.

6. Schaufel (3) nach einem der Ansprüche 4 oder 5, umfassend ferner einen Metallschild (4), der an der Vorderkante (8) angebracht und befestigt ist, wobei der zweite Abschnitt (15) den Metallschild (4) im Bereich des Fußes (6) überragt, aber von dem Metallschild (4) im Bereich der Spitze (10) bedeckt ist.

7. Schaufel (3) nach Anspruch 6, wobei der zweite Abschnitt (15) den Metallschild (4) des Fußes (6) bis zu 40% bis 50% einer Höhe (5) der Schaufel (3) überragt, dann von dem Metallschild (4) bis zur Spitze (10) bedeckt ist.

8. Schaufel (3) nach einem der Ansprüche 4 bis 7, wobei sich der zweite Abschnitt (15) in halber Höhe (h/2) der Schaufel (3) über eine Länge (L2) erstreckt, die zwischen 10% und 30% der Sehnenlänge (L) der Struktur aus Verbundwerkstoff liegt.

9. Schaufel (3) nach einem der Ansprüche 4 bis 8, wobei sich der zweite Abschnitt (15) an der Spitze (10) der Schaufel (3) über eine Länge (L3) erstreckt, die zwischen 0% und 5% der Sehnenlänge (L) der Struktur aus Verbundwerkstoff liegt.

10. Schaufel (3) nach einem der Ansprüche 1 bis 9, wobei die Faserverstärkung (5) ferner einen dritten Abschnitt (16) umfasst, der sich zwischen dem zweiten Abschnitt (15) und dem ersten Abschnitt (14) erstreckt, wobei sich eine Dichte der zweiten Litzen (13) im dritten Abschnitt (16) vom zweiten Abschnitt (15) zum ersten Abschnitt (14) schrittweise verringert.

11. Schaufel (3) nach Anspruch 10, wobei sich der dritte Abschnitt (16) über eine Länge (L4) erstreckt, die zwischen 5% und 10% der Sehnenlänge (L) der Struktur aus Verbundwerkstoff liegt.

12. Schaufel (3) nach einem der Ansprüche 1 bis 11, umfassend ferner einen Metallschild, der an der Vorderkante (8) angebracht und befestigt ist, wobei der Metallschild den zweiten Abschnitt (15) bedeckt und den ersten Abschnitt (14) frei lässt.

13. Schaufel (3) nach einem der Ansprüche 1 bis 12, wobei die ersten Litzen (12) und die zweiten Litzen (13) Carbonfasern umfassen.

14. Gebläse (1) für eine Turbomaschine, umfassend eine Vielzahl von Schaufeln (3) nach einem der Ansprüche 1 bis 13.

15. Turbomaschine, umfassend mindestens ein Gebläse (1) nach Anspruch 14.

## Claims

1. A blade (3) for a fan (1) of a turbomachine comprising a structure made of composite material comprising a fibrous reinforcement (5) obtained by three-dimensional weaving of warp strands and weft strands and a matrix in which the fibrous reinforcement (5) is embedded,
- the structure made of composite material comprising a leading edge (8) and a trailing edge (9);
- the fibrous reinforcement (5) comprising a first portion (14) forming the trailing edge (9) and a second portion (15) forming the leading edge (8); and
- the warp strands of the fibrous reinforcement (5) comprising first strands (12) having a predefined stiffness;
the warp strands of the fibrous reinforcement (5) further comprising second strands (13) having a stiffness greater than that of the first strands (12), the first portion (14) comprising all or part of the first strands (12) and being devoid of second strands (13) while the second portion (15) comprises all or part of the second strands (13);
the blade (3) being **characterised in that** the second strands (13) have a Young's modulus of between 1.2 and 1.5 times the Young's modulus of the first strands (12).

2. A blade (3) according to claim 1, wherein the warp strands of the second portion (15) additionally comprise first strands (12).

3. A blade (3) according to one of claims 1 or 2, further comprising a blade (7) with an aerodynamic profile capable of extending into an air flow, having a tip (10) and a foot (6) configured to be fixed to a disc (2) of the fan (1), and wherein the second portion (15) extends over an entire height (h) of the blade (3), from the foot (6) to the tip (10).

4. A blade (3) according to one of claims 1 to 3, further comprising a blade (7) with an aerodynamic profile capable of extending into an air flow having a tip (10) and a foot (6) configured to be fixed to a disc (2) of the fan (1), and wherein the second portion (15) extends over a portion of chord length (L) of the composite material structure which is variable between the foot (6) and the tip (10) of the blade (3).

5. A blade (3) as claimed in claim 4, wherein, at the root (6) of the blade (3), the second portion (15) extends over a length (L1) of between 25% and 40% of the chord length (L) of the composite material structure.

6. A blade (3) according to one of claims 4 or 5, further comprising a metal shield (4), attached and fixed to the leading edge (8), the second portion (15) projecting beyond the metal shield (4) at the root (6) but being covered by the metal shield (4) at the tip (10).

7. A blade (3) according to claim 6, wherein the second portion (15) projects beyond the metal shield (4) of the foot (6) up to 40% to 50% of a height (5) of the blade (3) and is then covered by the metal shield (4) up to the tip (10).

8. A blade (3) according to one of claims 4 to 7, wherein, at half-height (h/2) of the blade (3), the second portion (15) extends over a length (L2) of between 10% and 30% of the chord length (L) of the composite material structure.

9. A blade (3) according to one of claims 4 to 8, wherein, at the tip (10) of the blade (3), the second portion (15) extends over a length (L3) of between 0% and 5% of the chord length (L) of the composite material structure.

10. A blade (3) according to any of claims 1 to 9, wherein the fibrous reinforcement (5) further comprises a third portion (16) extending between the second portion (15) and the first portion (14), a density of the second strands (13) gradually decreasing in the third portion (16) from the second portion (15) toward the first portion (14).

11. A blade (3) according to claim 10, wherein the third portion (16) extends over a length (L4) of between 5% and 10% of the chord length (L) of the composite material structure.

12. A blade (3) according to one of claims 1 to 11, further comprising a metal shield attached and fixed to the leading edge (8), said metal shield covering the second portion (15) and revealing the first portion (14).

13. A blade (3) according to one of claims 1 to 12, in which the first strands (12) and the second strands (13) comprise carbon fibres.

14. A fan (1) for a turbomachine comprising a plurality of blades (3) in accordance with one of claims 1 to 13.

15. Turbomachine comprising at least one fan (1) according to claim 14.
